# EUROPEAN PATENT APPLICATION

(11) **EP 4 467 435 A1**
(43) Date of publication of application: **27.11.2024**
(21) Application number: 23175803.8
(22) Date of filing: 26.05.2023
(51) Int. Cl.: B62K 27/00

(54) **PET BIKE TRAILER**

(71) Applicant: Thule Sweden AB, 335 04 Hillerstorp (SE)
(72) Inventor: WINNERHOLT, Essy, Göteborg (SE); TÖNNESEN, Susanne, Bollebygd (SE); BANÉR, Stefan, Göteborg (SE); CARLSSON, Edvin, Göteborg (SE); ERICSSON, Andreas, Göteborg (SE); GUNNARSSON-OHLSON, Daniel, Kungälv (SE); DOBERAUER, Andreas, Värnamo (SE); LINDHOLM, Olof, 33135 Värnamo (SE)
(74) Representative: Wallentin, Lars

(57) **Abstract**

Disclosed is a pet bike trailer. The pet bike trailer comprises a folding arrangement for transferring the bike trailer into a stowage configuration.

## Description

### FIELD

The present invention relates to a pet bike trailer.

### BACKGROUND

Pet bike trailers are known in the art. They are used for transporting pets. The pet bike trailers typically comprise a frame assembly with a cover defining an interior accommodating space or compartment for the pet. Known pet bike trailers are bulky and cumbersome to stow. Furthermore, providing the frame assembly with the cover or removing the cover from the frame assembly is complicated and time-consuming.

### SUMMARY

It is an object of the invention to provide an improved pet bike trailer addressing at least one of the above disadvantages.

The object is solved by the configurations as presented in the claims, aspects and example configurations as described herein. Advantageous further formations may be gleaned from the dependent claims and from the below description.

According to an embodiment, a bike trailer is provided. The bike trailer may be configured as a pet bike trailer. The bike trailer may comprise an enclosure defining a compartment. The enclosure may define a compartment for a pet to be transported. The enclosure is transferable between a use configuration with enlarged volume and a stowage configuration with reduced stowage volume. The enclosure may further be transferable into a predefined intermediate configuration in which it comprises an intermediate volume between the enlarged volume and the stowage volume.

Accordingly, a bike trailer with two-stage transferability may be provided. For example, the bike trailer may be transferred into the intermediate configuration to provide an easier storing for daily use. The bike trailer may be transferred into the stowage configuration when it is to be stowed away.

In some embodiments, the bike trailer comprises a roof portion with a front roof portion and a rear roof portion. Furthermore, the bike trailer may comprise a base portion comprising a front base portion and a rear base portion. The roof portion may be supported on the base portion at the front roof portion and at the rear roof portion. The front roof portion and the rear roof portion may be independently transferable between a use position and a stowage position. In the use position, the respective roof portion is arranged at a greater distance from the base portion than in the stowage position. With such a configuration, the above-mentioned intermediate configuration may be provided by transferring the front roof portion or the rear roof portion to the stowage position. In some embodiments, the intermediate configuration is provided by transferring the front roof portion into the stowage position while the rear roof portion remains in use position. In some embodiments, the stowage configuration is achieved by transferring the front roof portion and the rear roof portion to the stowage position.

In some embodiments, the enclosure comprises a frame assembly at least partially limiting a boundary of the compartment of the bike trailer. The frame assembly may comprise a front frame portion and a rear frame portion. The front frame portion may comprise a front upper end portion configured to support the front roof portion and a front lower end portion coupled to the front base portion. The rear frame portion may comprise a rear upper end portion configured to support the rear roof portion and a rear lower end portion coupled to the rear base portion. The front frame portion and the rear frame portion may be respectively configured such that a distance between the respective upper end portion and the respective lower end portion is adjustable.

In some embodiments, at least one of the front frame portion and the rear frame portion is foldable between a use configuration and a stowage configuration.

In some embodiments, the front frame portion comprises a front frame hinge portion coupling the front upper end portion and the front lower end portion. The front frame hinge portion may be configured to arrest the front upper end portion and the front lower end portion in the use configuration.

In some embodiments, the front frame hinge portion is configured to at least hinder the front upper end portion and the front lower end portion from moving out of the stowage configuration. The front frame hinge portion may comprise a cam surface arrangement. The front frame hinge portion may be configured as a knee joint.

In some embodiments, the front frame hinge portion may comprise a lock configured to lock a rotation of the front upper end portion and the front lower end portion relative to each other when the front upper end portion and the front lower end portion are in the stowage configuration. The lock may comprise a pin lock. The pin lock may comprise a biased pin which is configured to get in locking engagement when the front upper end portion and the front lower end portion are in the stowage configuration and/or are in the use configuration.

The front frame hinge portion may comprise a first hinge portion coupled to the front upper end portion and a second hinge portion coupled to the front lower end portion. The pin of the pin lock may be arranged on the second hinge portion and the first hinge portion may comprise recesses or pin holes for receiving the pin. The pin may be movable in a direction parallel to the pivot axis of the hinge portion and may be biased towards the first hinge portion. The first hinge portion comprises two pin holes. A first pin hole is aligned with the pin when the front frame is in the unfolded or use configuration and a second pin hole is aligned with the pin when the front frame portion is in the folded or stowage configuration. The pin and the second pin hole may be configured such that the engagement between pin and second pin hole is automatically released when a predetermined force is exceeded. It is the second pin hole that achieves this functionality. A surface portion, for example a rib, is provided between the first pin hole and the second pin hole. The pin may run on this surface portion. The user will therefore not have to hold the pin in a retracted position. The pin may have a rounded end that will slide against the surface portion in the hinge until it reaches the second pin hole. The second pin hole may be shallow with chamfered sides and may be configured to only provide a low locking force sufficient for preventing unwanted unfolding of the frame portion when the trailer is stored. When the user wants to unfold the frame portion, he does not have to pull on the pin but simply use a low force on the frame portion out of the folded position to make the pin slide out of the second pin hole.

The only time the user needs to use the handle is to release the to fold the frame.

In some configurations, the front frame hinge portion is configured as an over dead center joint. Accordingly, once positioned in the use configuration, the hinge portion has to pass a dead center on the way towards the stowage configuration.

The rear upper end portion and the rear roof portion may be coupled to each other by means of a disconnecting mechanism allowing to disconnect the rear upper end portion from the rear roof portion without tools. The disconnecting mechanism may comprise a pin lock. The pin lock may comprise a biased pin provided on the rear roof portion and configured to engage with the rear upper end portion. The connection may be released by moving the pin against an urging force thereby disengaging the pin from the rear upper end portion.

The lower end portions of the front and rear front frame portions may be hingedly coupled to the base portion.

The base portion may comprise a base shell. The lower end portions may be coupled to an upper edge portion of the base shell.

The bike trailer may further comprise a lower frame portion coupled to the upper edge portion. The lower end portions may be coupled to the lower frame portion. For example, the lower end portions may be coupled to the lower frame portion at front connecting portions connecting side members of the frame assembly with a front cross member of the frame assembly. The lower end portions may be coupled to the lower frame portion at rear attachment portions coupled to rear ends of side members of the lower frame portion.

The lower frame portion may comprise lower elongate side members extending in longitudinal direction of the bike trailer. The lower elongate side members may comprise piping grooves. The piping grooves may be provided on an inner side of the elongate side members. The piping grooves are configured to receive a piping portion or keder portion of the cover arrangement to be supported on the frame assembly. The piping grooves may also be referred to as keder grooves.

The bike trailer may further comprise an upper frame portion coupled to the front upper end portion and the rear upper end portion. The upper frame portion may comprise upper elongate side members extending in longitudinal direction of the bike trailer. Each upper elongate side member may comprise two piping or keder grooves, wherein one piping groove of the piping grooves may be provided on an inner side of the upper elongate side members and another one of the piping grooves may be provided on a lower side of the elongate side members. A roof portion of a cover arrangement may be coupled to the piping groove which is provided on the inner side of the upper elongate side member and a side portion of the cover arrangement may be coupled to the piping groove on the lower side of the elongate side member so that a portion of the elongate side member remains invisible from outside of the bike trailer even when the cover arrangement is attached to the frame assembly.

In some embodiments, the portions of the cover arrangement are attached to the frame assembly both at the top and at the bottom profile along the edge of the bottom portion by means of piping (keder) and groove attachment. This renders it easier for a user to remove and attach the cover portions. Moreover, this reduces the number of visible seams on the inside which could otherwise risk inducing biting or clawing from a pet.

In some configurations, the cover arrangement may comprise a front door and/or a rear door. A holding structure may be provided in the roof portion and may be configured to hold the front door or the rear door open.

In some embodiments, the base portion comprises a tub-like bottom portion, for example a plastic bottom tray. The bottom portion may comprise an opening on the rear side. The bottom portion may comprise a recess formed in an outer side and at least partially extending in cross direction of the bottom portion. The recess may be configured to receive a supporting member extending between wheel bearings of the bike trailer. Accordingly, the bottom portion can be supported on the supporting member extending between the wheel bearings. In some embodiments, only a single recess for receiving the supporting member is provided. The recess may be provided in a rear part of the bottom portion.

In an embodiment, a bike trailer comprises an enclosure defining a compartment and wheels for supporting the enclosure on the ground. The bike trailer may comprise at least one designated ground contact portion configured to support the enclosure on the ground in addition to the wheels. The ground contact portion is provided on a rear side of the enclosure. The ground contact portion together with an outer circumference of the wheels is able to support the bike trailer in an upright position on a level ground.

In some embodiments, the ground contact portion, the wheels and the enclosure are configured such that only the at least one ground contact portion and the wheels contact the ground when the bike trailer is brought in an upright position and supported on a level ground. The at least one ground contact portion may be provided such that an imaginary plane contacting an outer circumference of the wheels and the at least one ground contact portion does not intersect with or contact other portions of the bike trailer.

In some embodiments, at least one ground contact portion is provided on a frame assembly of the enclosure. The frame assembly may comprise an elongate side member and the ground contact portion may be coupled to a rear end portion of the elongate side member.

In some configurations, at least one ground contact portion is provided on a base portion. The base portion may be configured as or may comprise a tub-like bottom portion, for example a bottom portion as described in other portions of this specification.

The ground contact portion may comprise a detachable contact member. The detachable contact member may be made from a plastic material, for example a rubber material. The contact member may comprise a contact surface and a coupling section for detachably fixing the contact member to a fixation portion of the ground contact portion.

The fixation portion may be coupled to a rear end portion of an elongate side member of a lower frame portion of a frame assembly and/or to the base portion. In some configurations, the fixation portion may be provided on a rear attachment portion attached to the rear end portion of of the lower elongate side member of the frame assembly.

In embodiments comprising the ground contact portion, the wheels may be configured and mounted on the enclosure such that they extend beyond the lower rear portion of the enclosure when viewing the bike trailer from the side. For example, the rear wheels may extend beyond a lower rear portion of the base portion.

The enclosure may be transferable between at least a use configuration with an enlarged volume and a stowage configuration with reduced stowage volume, and may be transferable into a predefined intermediate configuration as already mentioned before.

Two ground contact portions may be provided on opposite sides of a rear opening of the base portion. The ground contact portions facilitate standing storage without damaging the cover arrangement or other aesthetic features of the bike trailer. The ground contact portions together with the wheels of the trailer form a stable support when the trailer rests upright. The ground contact portions may protrude so only these, and the wheels are in contact with the ground when the trailer is in upright standing configuration. The ground contact portions may be provided on or attached to the bottom portion and/or on the frame assembly. The trailer may be transferred into the intermediate configuration before it is place in the upright standing position.

According to a further embodiment, a bike trailer comprises an enclosure defining a compartment, wheels for supporting the enclosure on the ground, and a parking brake mechanism configured to lock a rotation of the wheels. The parking brake mechanism comprises a foot operable brake pedal. The brake pedal is arranged on the bike trailer so as to be pushable by foot by a user standing forward of the brake pedal or rearward of the brake pedal.

The brake pedal may be arranged on a lateral side portion of the enclosure at a position forward of the wheel. The brake pedal may be mounted on the enclosure to be pivotable about a pivot axis. The pivot axis may extend in cross direction of the bike trailer or in longitudinal direction of the bike trailer. The brake pedal may comprise an operating portion. The operating portion may at least partially extend in lateral direction away from the enclosure.

In some configurations, the parking brake mechanism is configured to lock a rotation of the wheel by establishing a positive locking between an engaging portion operatively coupled to an operating member of the parking brake mechanism, for example to the foot pedal, and a receiving portion operatively coupled to the wheel. The engaging portion may be configured to move along a curved path between a locking position in which it engages with the receiving portion and an unlocking position in which an engagement between the engaging portion and the receiving portion is released.

In a further embodiment, a bike trailer comprises a base portion, a frame assembly attached to the base portion, a cover arrangement attachable to the frame assembly, and a base insert configured to be placed in the base portion. The base insert is configured detachably mountable to the cover arrangement. The base portion may be a tub-like bottom portion as described in other portions of this specification. Again, the bike trailer may be embodied as a pet the bike trailer.

The bike trailer may further comprise a connecting arrangement for connecting an edge portion of the base insert to the cover arrangement. The connecting arrangement may be configured to join the cover arrangement and the base insert by coupling connecting partners provided on the cover arrangement and on the edge portion. A connection may be established by positively locking the connecting partners. The connecting arrangement may comprise a hook and loop fastener. The connecting arrangement may comprise Velcro tapes each of which forming a connecting partner. The connecting arrangement may comprise a support arrangement with zipper partners forming the connecting partners. The zipper partners may be zipper bands or zipper tapes. One zipper partner may be provided on the cover arrangement on a sewing allowance of a lower piping portion or keder portion provided on the cover arrangement. In this way, the pet cannot get harmed on the frame assembly portion on the upper edge of the base portion.

The base insert may be configured to cover an inner side of the base portion up to a position above the connecting portion between the cover arrangement and a lower frame portion of the frame assembly.

The base insert may comprise a padding on an inner side. In some configurations, the base insert may additionally or alternatively comprise pockets on an outer side. The pockets may be configured for receiving reinforcing tabs.

According to a further embodiment, a bike trailer is provided. The bike trailer may be embodied as a pet bike trailer. The bike trailer may comprise a frame assembly comprising a front frame portion, an upper frame portion and a lower frame portion. The front frame portion may be coupled to the upper frame portion and to the lower frame portion. The bike trailer further comprises a cover arrangement comprising two side wall portions, a front portion and a roof portion. The frame assembly and the cover arrangement may be configured such that at least the side wall portions are insertable into the frame assembly between the upper frame portion and the lower frame portion.

The front portion may couple the side wall portions to each other. The front portion and the sidewall portions may be integrally formed with each other. The front portion and the sidewall portions may be fixedly coupled to each other, for example by sewing. The lower frame portion may comprise a piping receiving portion and the cover arrangement may comprise a lower piping portion configured to be coupled with the piping receiving portion. The lower frame portion may comprise elongate side members and the piping receiving portion may comprise a piping groove provided in each elongate side member. The lower frame portion may comprise a front cross member and the piping receiving portion may comprise a piping groove provided in the front cross member.

In some embodiments, the lower frame portion may comprise connecting portions connecting the front cross member with the elongate side members. The connecting portions may be configured to receive and guide the lower piping portion between the adjacent members comprising the piping grooves, in particular between the front cross member and the side members. Covers may be detachably mountable on the connecting portions. The covers may be configured to partially define or limit the piping receiving portion when mounted on the respective connecting portion. The connecting portions may be configured such that access to the piping receiving portion is granted when the covers are removed from the connecting portions.

In some configurations, the upper frame portion comprises upper elongate side members. The upper elongate side members may comprise a lower piping groove for receiving an upper piping portion of the side wall portion of the cover arrangement. The upper elongate side members may comprise an upper piping groove configured to receive a piping on a lateral edge of the roof portion of the cover arrangement.

In a further embodiment, a pet bike trailer comprising a tub-like bottom portion and a frame assembly attached to the tub-like bottom portion is provided. The frame assembly may be configured to support a cover arrangement and to limit an interior compartment together with the tub-like bottom portion. The bottom portion may comprise an opening in its rear side.

In some configurations, the bottom portion comprises a bottom section providing a support from below for a pet, front wall portion limiting an accommodating space of the bottom portion at a forward end portion thereof, sidewall portions limiting an accommodating space of the bottom portion in cross direction, and a rear wall portion at least partially limiting the accommodating space of the bottom portion at a rearward end portion. The opening may be provided in the rear wall portion.

In some embodiments, the bike trailer further comprises a piping groove arrangement provided on or adjacent to portions limiting the opening. The piping groove arrangement may comprise a piping mounting rail attached to an edge portion limiting the opening and comprising a piping groove for receiving a piping portion of the rear portion of the flexible covering of the cover arrangement. In some embodiments, the bottom portion comprises a recess formed in an outer side and extending in cross direction of the bottom portion, wherein the recess is configured to receive a supporting member such as the support beam, extending between wheel bearings, wherein the recess may be formed in the rear portion of the bottom section. Providing the supporting member in the recess provides stability to the entire trailer.

In some embodiments, a height of the front wall portion is lower than the height of the rear wall portion. In some configurations, the bottom portion comprises an upper edge portion and the frame assembly is coupled to the upper edge portion.

Other features of the present invention will be apparent from consideration of the information contained above as well as in or in combination with the following detailed description, drawings and claims and configurations given in itemized structure of aspects below. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view of a bike trailer according to an embodiment.
Fig. 2 shows a rear view on a bike trailer according to an embodiment.
Fig. 3 shows a side view from the left on the bike trailer of Fig. 1.
Fig. 4 shows a side view of a bike trailer according to an embodiment.
Fig. 5 shows a side view of the bike trailer of Fig. 4 with the bike trailer in upright position.
Figs. 6 and 7 shows rear views on a bike trailer according to an embodiment.
Fig. 8 shows a perspective view of components of a brake mechanism according to an embodiment.
Fig. 9 shows a perspective view on the wheel bearing of a bike trailer according to an embodiment.
Fig. 10 shows a rear side view of the wheel bearing of Fig. 9.
Fig. 11 shows a perspective view of a bike trailer according to an embodiment.
Fig. 12 shows a perspective view on a tub-like bottom portion of a base portion of the bike trailer according to an embodiment.
Fig. 13 shows a perspective view from below on a bike trailer according to an embodiment.
Figs. 14 to 16 show an embodiment of a foldable bike trailer.
Figs. 17 to 20 shown embodiment of a base insert.
Fig. 21 shows a sectional view of an upper elongate side member of an upper frame portion according to an embodiment.
Fig. 22 shows a sectional view of a lower elongate side member of a lower frame portion according to an embodiment.
Fig. 23 shows an enlarged perspective view of a connecting portion of the frame assembly according to an embodiment.
Fig. 24 shows an enlarged perspective view of a rear attachment portion of the frame assembly according to an embodiment.
Fig. 25 shows a perspective exploded view of parts of the brake mechanism of Fig. 8.
Fig. 26 shows a perspective view on a mounting portion of an operating member of the brake mechanism.
Fig. 27 shows a perspective view on a hinge in a front frame portion according to an embodiment.
Fig. 28 shows parts of a locking mechanism according to an embodiment provided in the hinge of Fig. 27.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement, interlocking contact.

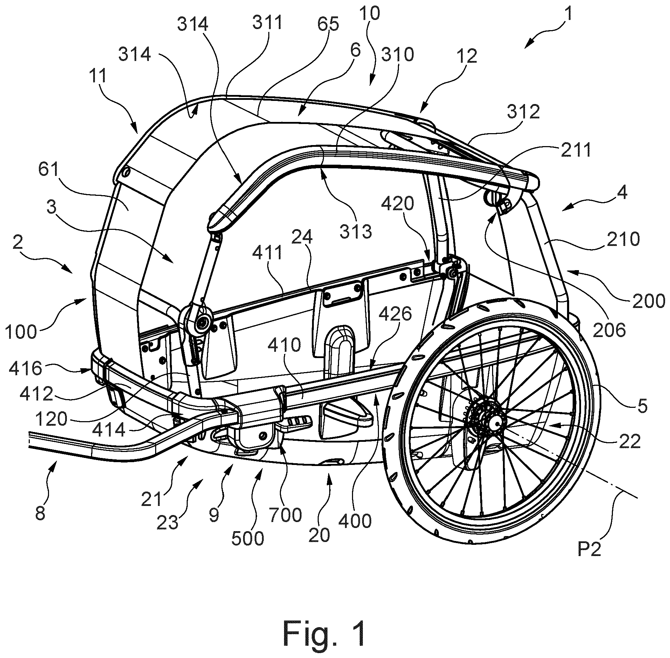

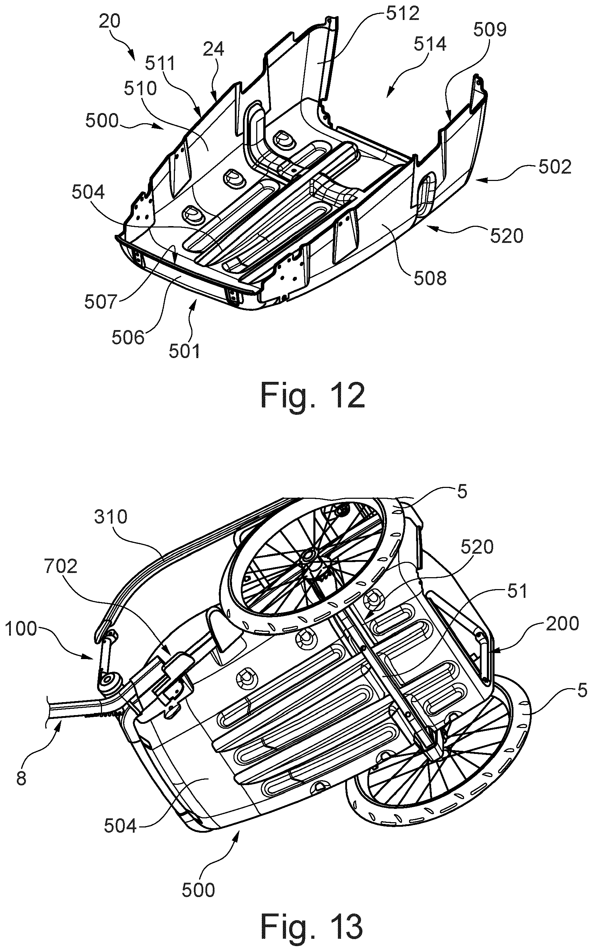

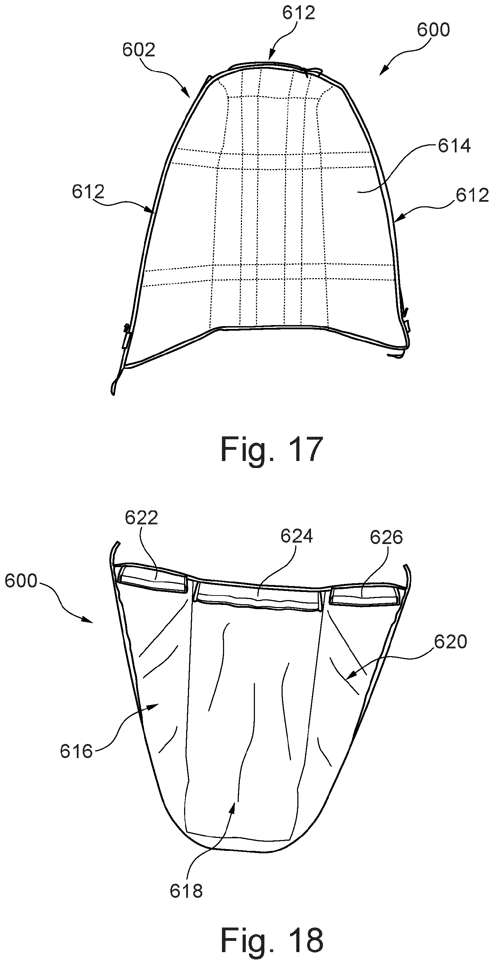

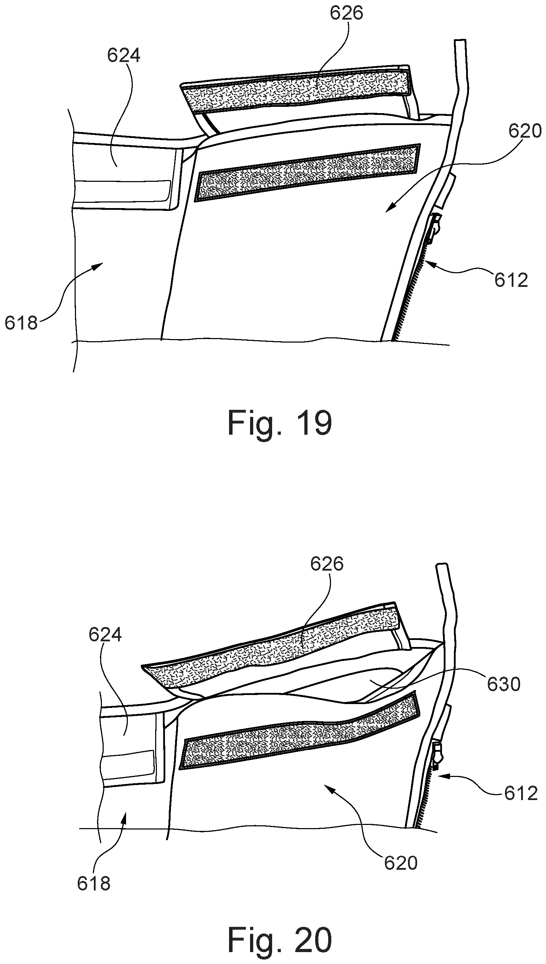

Embodiments of a pet bike trailer will be described with reference to Figs. 1 to 24.

Fig. 1 shows a perspective view on a bike trailer 1 according to an embodiment. The bike trailer 1 is a pet bike trailer. The bike trailer 1 comprises an enclosure 2 defining a compartment 3. Two wheels 5 are coupled to the enclosure 2 for supporting the enclosure 2 on the ground. The bike trailer 1 further comprises a coupling arrangement 8 configured to couple the bike trailer 1 to a bike. The coupling arrangement 8 may comprise a towbar. The bike trailer 1 further comprises a frame assembly 4. A cover arrangement 6 is supported on the frame assembly 4. The coupling arrangement 8 may be coupled to the frame assembly 4 by means of an interface portion 9.

The bike trailer 1 comprises a roof portion 10. The roof portion 10 comprises a front roof portion 11 and a rear roof portion 12.

The bike trailer 1 further comprises a base portion 20. The base portion 20 forms a lower support and is configured to support a pet from below. The frame assembly 4 is coupled to the base portion 20. Accordingly, the frame assembly 4 and the base portion 20 may form the enclosure 2 and may together define the compartment 3. The base portion 20 comprises a front base portion 21 and a rear base portion 22. The base portion 20 may comprise a base shell 23. The base shell 23 may be open to the top. The base shell 23 may comprise an upper edge portion 24.

The base shell 23 may be configured as or may comprise a tub-like bottom portion 500. The bottom portion 500 may comprise a bottom section 504 providing a support from below, a front wall portion 506 limiting an accommodating space of the bottom portion 500 at a forward end portion 501 thereof, side wall portions 508, 510 limiting an accommodating space of the bottom portion 500 in cross direction, and a rear wall portion 512 at least partially limiting the accommodating space of the bottom portion 500 at a rearward end portion 502. An upper end of the left side wall portion 508 defines a left edge portion 509. An upper end of the right side wall portion 510 defines a right edge portion 511. An upper end of the front wall portion 506 defines a front edge portion 507. An upper end of the rear wall portion 512 defines a rear edge portion 513. The front edge portion 507, the right and left edge portions 509, 511 and the rear edge portion 513 may together form the upper edge portion 24. The bottom portion 500 may be integrally formed from plastics moulding.

A recess 520 extending in cross direction of the bottom portion 500 may be provided in the rear portion of the bottom portion 500 in the bottom section 504. The recess 520 may extend over the entire bottom section 504 and may optionally also partially extend in the left side wall portion 508 and in the right side wall portion 510 up to a predetermined position which is spaced from the upper edges of the sidewall portions 508, 510. The recess 520 may be provided for receiving or accommodating a support beam 51 extending between wheel bearings 52 of the wheels 5. The support beam 51 may form part of a supporting structure 50 for coupling the wheels 5 to the bottom portion 500 and to the frame assembly 4. In the supporting structure, the support beam 51 may be connected to an upper supporting structure 402 of the frame assembly 400. The supporting structure may form a part of the frame assembly 400.

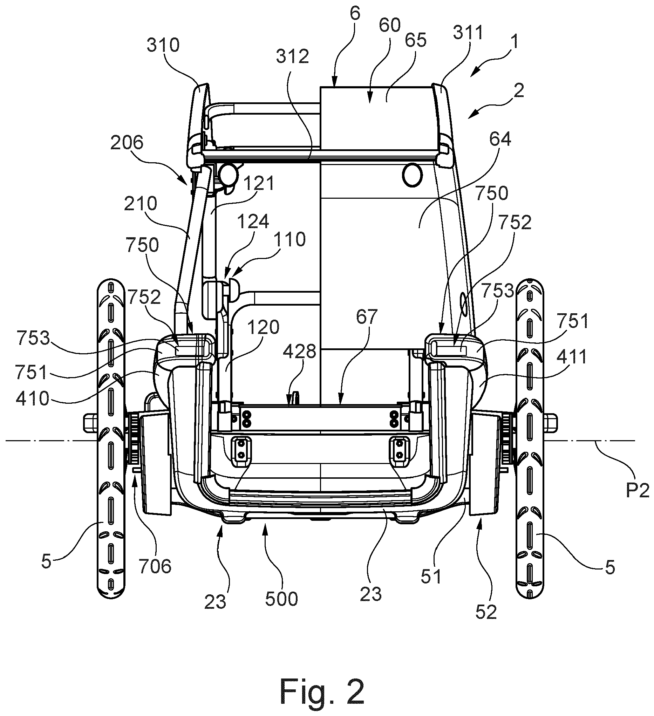

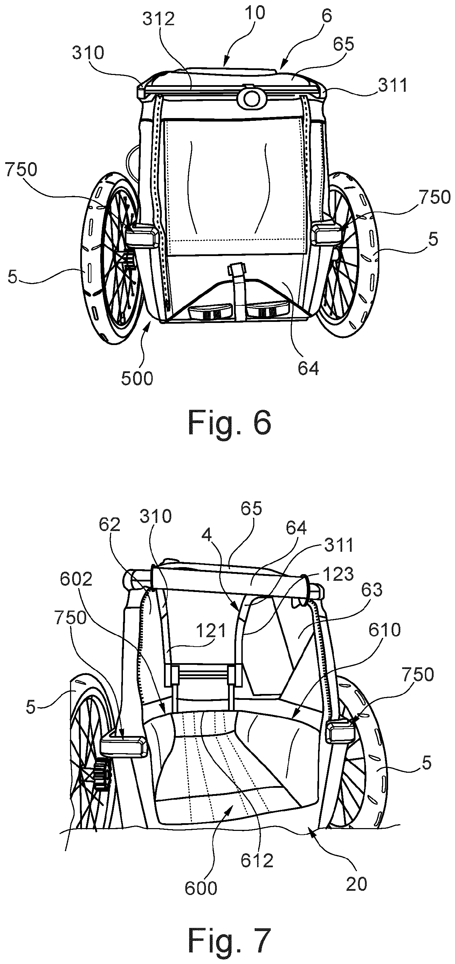

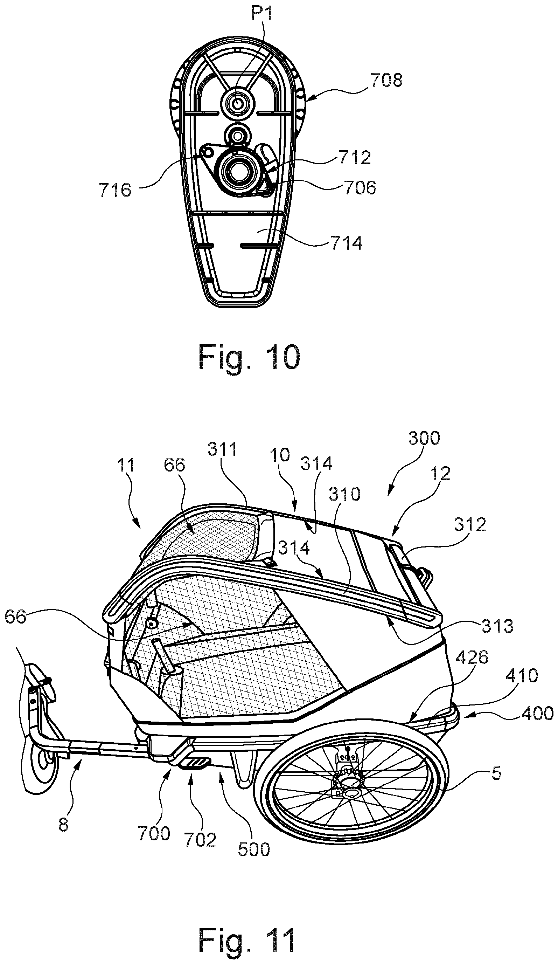

An opening 514 may be provided in the bottom portion 500 providing easier access to the compartment for a pet. The opening 514 may be provided in the rearward end portion 502 of the bottom portion 500. For example, the opening 514 may be provided in the rear wall portion 512 as best seen in Fig. 10. The opening 514 may be provided such that it extends all the way down from the upper edge portion 24 to the bottom section 504. The opening 514 may be a recess formed in the rear wall portion 512. In the alternative, the opening 514 may also be formed by omitting the rear wall portion 512. The opening 514 may be configured such that edge portions limiting the same may extend in a U-shape. On these edge portions, piping mounting rails 516 with piping grooves 518 or other suitable members for coupling an edge portion of a fabric may be provided as best seen in Fig. 2. As shown in Fig. 6, a rear portion 64 of a flexible covering 60 of the cover arrangement 6 is coupled to the edge portions limiting the opening 514.

Besides the rear portion 64, the flexible covering 60 comprises a front portion 61, a left side portion 62, a right side portion 63 and a roof portion 65. The front portion 61, the side portions 62, 63 and the roof portion 65 may be formed as an integral single-piece part. The front portion 61 and the side portions 62, 63 can be sewn together. The front portion 61 may couple the forward ends of the side portions 62, 63 to each other. Each of the portions of the flexible covering 60 may comprise a window portion and/or a fly screen portion 66 and may optionally comprise a flap for covering the window portion or fly screen portion.

The frame assembly 4 comprises a front frame portion 100, a rear frame portion 200, an upper frame portion 300 and a lower frame portion 400.

The upper frame portion 300 forms a supporting structure of the roof portion 10. Thus, the roof portion 10 comprises the upper frame portion 300. The upper frame portion 300 comprises a left upper elongate side member 310 and a right upper elongate side member 311. Each of the side members 310, 311 comprises an elongate profile, for example made of aluminum. The side members 310, 311 are coupled to each other at a rear portion thereof by means of an upper cross bar 312. The upper frame portion 300 may comprise a U-shape when viewed from above with the upper cross bar 312 forming a base of the U-shape and the side members 310, 311 forming left and right legs of the U-shape. In the embodiment, the U-shape is open in forward direction. The side members may run in parallel with each other. The side members 310, 311 may comprise a curved shape, for example curved in a manner such that a middle portion thereof is positioned above an imaginary straight line running through the ends of the side members 310, 311.

The lower frame portion 400 forms a supporting structure of the base portion 20. The lower frame portion 400 may comprise a left lower elongate side member 410 and a right lower elongate side member 411. Each of the side members 410, 411 comprises an elongate profile, for example made of aluminum. The side members 410, 411 are coupled to each other at a front portion thereof by means of a lower front cross member 412. In some embodiments, the side members 410, 411 may be coupled to the lower front cross member 412 by means of front connecting portions 414, 416. For example, end portions of the connecting portions 414, 416 may be received in and fixed to end portions of the side members 410, 411 or of the lower front cross member 412 for coupling the side members 410, 411 to the lower front cross member 412. In some embodiments, rear attachment portions 418, 420 are attached to the rear end portions of the side members 410, 411.

The lower frame portion 400 may comprise a U-shaped portion when viewed from above. The lower front cross member 412 may form a base of the U-shaped portion and the side members 410, 411 may form left and right legs of the U-shaped portion. In the embodiment, the U-shaped portion is open in rearward direction. The side members 410, 411 may run in parallel with each other. The side members 410, 411 may extend along curved paths that extend symmetric to a middle vertical plane in longitudinal direction of the bike trailer.

The side members 410, 411, the lower front cross member 412, the front connecting portions 414, 416 and/or the rear attachment portions 418, 420 are fixedly attached to the upper edge portion 24 of the base shell 23 and may form an upper supporting structure 402 for the base shell 23. The upper edge portion 24 may comprise a U-shape.

The lower frame portion 400 may further comprise a lower supporting structure 404. The lower supporting structure 404 may be configured to support the base shell 23 from below. The lower supporting structure 404 may comprise a cross member, for example the support beam 51, coupled to the upper supporting structure 402 at opposite ends. The lower supporting structure 404 may be U-shaped with the crossmember or a portion of the crossmember forming a base, for example a supporting base for supporting the base shell 23 from below, and with two leg portions extending away from the base on opposite ends of the base. Wheel bearing arrangements or wheel bearings 52 may be provided on the leg portions. Accordingly, the wheels 5 may be coupled to the lower frame portion 400 such that they may rotate about an axis P2 arranged at a position between the upper supporting structure 402 and the cross member, for example the support beam 51.

The lower frame portion 400 may further comprise a rear connecting arrangement coupling the rear end portions of the side members 410, 411 and/or the rear attachment portions 418, 420 to each other. The rear connecting arrangement may comprise a rear lower frame member 424 which is formed to follow the contour of the opening 514. The frame member may extend along an inner side wall of the base shell 23 in which the opening 514 is formed. The rear lower frame member 424 may be U-shaped with free end portions thereof being connected to the rear attachment portions 418, 420. The rear lower frame member 424 may rigidly couple the rear end portions of the side members 410, 411 and/or the rear attachment portions 418, 420.

The front frame portion 100 is configured to support the roof portion 10 on the base portion 20 and/or the base shell 23 and/or the upper supporting structure 402. The front frame portion 100 may comprise a front upper end portion 102 and a front lower end portion 104. The front upper end portion 102 may be coupled to the front roof portion 11. The front lower end portion 104 may be coupled to the front base portion 21. The front lower end portion 104 may be coupled to the upper supporting structure 402. For example, the front lower end portion 104 may be coupled to the connecting portions 414, 416.

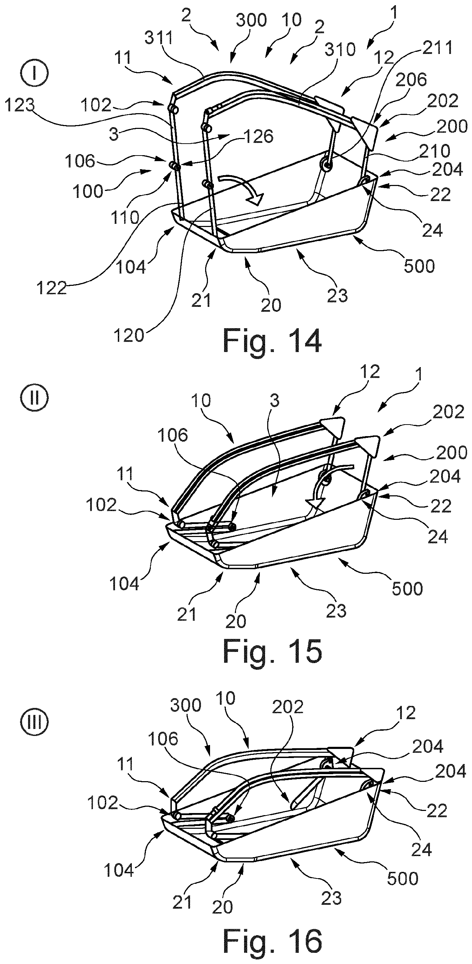

The front frame portion 100 may be configured foldable between a use configuration (see for example Fig. 14) and a stowage configuration (see for example Fig. 15). The front frame portion 100 may comprise a front frame hinge portion 106. The front frame hinge portion 106 may couple the front upper end portion 102 and the front lower end portion 104. The front frame portion 100 may comprise multiple frame portions or frame members. In some embodiments, the front frame portion 100 comprises a lower left frame portion120 and an upper left frame portion 121 coupled to each other at their first ends by means of a left hinge 124. In some embodiments, the front frame portion 100 comprises a lower right frame portion 122 and an upper right frame portion 123 coupled to each other at their first ends by means of a right hinge 126. A second end of the lower left frame portion 120 is hingedly coupled to the left connecting portion 414. A second end 127 of the lower right frame portion 120 is hingedly coupled to the right connecting portion 416. A second end of the upper left frame portion 121 is hingedly coupled to the front end of the left upper elongate side member 310. A second end of the upper right frame portion 123 is coupled to the front end of the right upper elongate side member 311. The front frame hinge portion 106 may be configured as an over dead center joint. Accordingly, the pivot axes defined by left and right hinges 124, 126 are respectively movable beyond imaginary straight lines connecting the points at which the upper frame portions 121, 123 are hingedly coupled to the front ends of the upper elongate frame members 310, 311 and the points at which the lower frame portions 120, 122 are hingedly coupled to the connecting portions 414, 416.

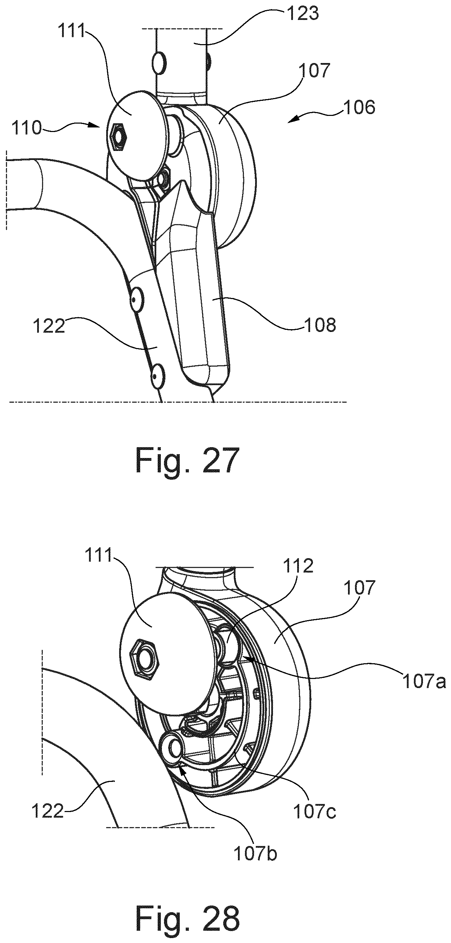

In some embodiments, the front frame hinge portion 106 may be configured to arrest the front upper end portion 102 and the front lower end portion 104 in the use configuration. The front frame hinge portion 106 may comprise a lock 110 configured to lock a rotation of the front upper end portion 102 and the front lower end portion 104 relative to each other when the front upper end portion 102 and the front lower end portion 104 are in the stowage configuration. The lock may comprise a pin-lock. In some embodiments, each hinge 124, 126 of the front frame portion 106 comprises a lock. An exemplary lock 110 is shown in Figs. 27 and 28. The lock 110 is provided in the right hinge 126. Such a lock may be additionally or alternatively provided in the left hinge 124 as for example shown in Fig. 2. The front frame hinge portion 100 may comprise a first hinge portion 107 coupled to the front upper end portion 102 and a second hinge portion 108 coupled to the front lower end portion 104. The first hinge portion 107 and the second hinge portion 108 are swivably coupled to each other. The first hinge portion 107 may be coupled to the upper right frame portion 123 and the second hinge portion 108 may be coupled to the lower right frame portion 122. The lock 110 is configured as a pin lock. The lock 110 comprises a pin 112 biased in locking direction. The pin 112 may be biased by an urging member, for example a spring. The pin 112 may be arranged on the second hinge portion 108. The pin 112 is coupled to a gripping portion 111 operable by a user. The pin 112 can be moved in unlocking direction by pulling the gripping portion 111. The first hinge portion 107 may comprise recesses 107a, 107b or pin holes for receiving the pin 112. The pin 112 may be arranged movable in a direction parallel to the pivot axis of the front frame hinge 106 and may be biased towards the first hinge portion 107. The first hinge portion 107 may comprise two pin holes 107a, 107b. A first pin hole 107a is aligned with the pin 112 when the front frame portion 100 is in the unfolded or use configuration and a second pin hole 107b is aligned with the pin 112 when the front frame portion 100 is in the folded or stowage configuration. The pin 112 and the second pin hole 107b may be configured such that the engagement between pin 112 and second pin hole 107b is automatically released when a predetermined force acting on the first hinge portion 107 in unfolding direction is exceeded. The second pin hole 107b may be configured such that this functionality is achieved, for example by being configured shallow and/or with an inclined surface such that a rotation of the first hinge portion relative to the second hinge portion urges the pin out of the recess. A surface portion 107c, for example a rib, is provided between the first pin hole and the second pin hole. The pin may run on this surface portion between the recesses and guide the pin into the respective recess. A user will therefore not have to hold the pin in a retracted position. The pin may have a rounded end that will slide against the surface portion in the hinge until it reaches the second pin hole. The second pin hole may be shallow with chamfered sides and may be configured to only provide a low locking force sufficient for preventing unwanted unfolding of the frame portion when the trailer is stored. When the user wants to unfold the frame portion, he does not have to pull on the pin but simply use a low force on the frame portion out of the folded position to make the pin slide out of the second pin hole. The first pin hole 107 and the pin 112 may be configured such that an engagement between them may only be released by an active operation of the user, namely by pulling the pin 112 out of the first pin hole 107a using the gripping portion 111. This is then the only time the user needs to use the gripping portion 111 to release the lock for folding the front frame portion 100. While a pin-lock is described as an example of a lock, other configurations in which the rotation of the hinge portions with respect to each other can be blocked may be provided.

In some embodiments, the front frame hinge portion 106 is configured to at least hinder the front upper end portion 102 and the front lower end portion 104 from moving out of the stowage configuration.

The rear frame portion 200 is configured to support the roof portion 10 on the base portion 20 and/or the base shell 23 and/or the upper supporting structure 402. The rear frame portion 200 may comprise a rear upper end portion 202 and a rear lower end portion 204. The rear upper end portion 202 may be coupled to the rear roof portion 12. The rear upper end portion 202 may be disconnectably coupled to the rear roof portion 12 by means of a disconnecting mechanism 206. The rear lower end portion 204 may be coupled to the rear base portion 22. The rear lower end portion 204 may be coupled to the upper supporting structure 402. For example, the rear lower end portion 204 may be hingedly coupled to the upper supporting structure 402 and/or the base shell 23, for example to the rear attachment portions 418, 420.

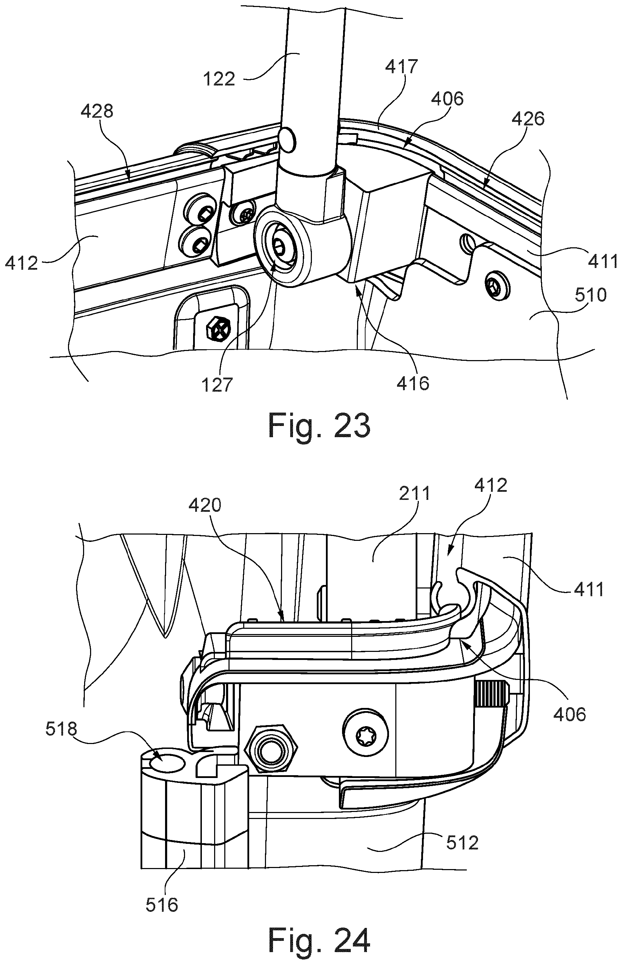

The rear frame portion 200 may comprise a rear left frame portion 210 and a rear right frame portion 211. The frame portions 210, 211 may be hingedly coupled to the rear attachment portions 418, 420 at a first portion thereof, for example at an end portion, as best seen in Fig. 24. A second portion of the frame portions 210, 211 may be configured disconnectably couplable with the rear roof portion 12. The disconnecting mechanism 206 is configured to releasably couple the second portions of the frame portions 210, 211 to the rear roof portion 12. The rear roof portion 12 may comprise receiving portions and the second portions of the frame portions 210, 211 may respectively comprise an engaging portion receivable and lockable in one of the receiving portions. The disconnecting mechanism 206 may comprise a pin-lock. Accordingly, the frame portions 210, 211 may be disconnected from the rear roof portion 12 and pivoted in forward direction for stowing them in the base shell 23 as indicated by the arrow in Fig. 15. When the frame portions 210, 211 are disconnected from the rear roof portion 12, the rear roof portion 12 may be brought closer to the base portion 20 to reduce an overall outer dimension of the rear part of the bike trailer as best seen in Fig. 16.

With the above configuration of the front frame portion 100 and the rear frame portion 200, wherein the enclosure 2 is transferrable between a use configuration I with enlarged volume (see Fig. 14) and a stowage configuration III with a reduced stowage volume (see Fig. 16) and into an intermediate configuration II in which it comprises an intermediate volume between the enlarged volume and the stowage volume (see Fig. 15).

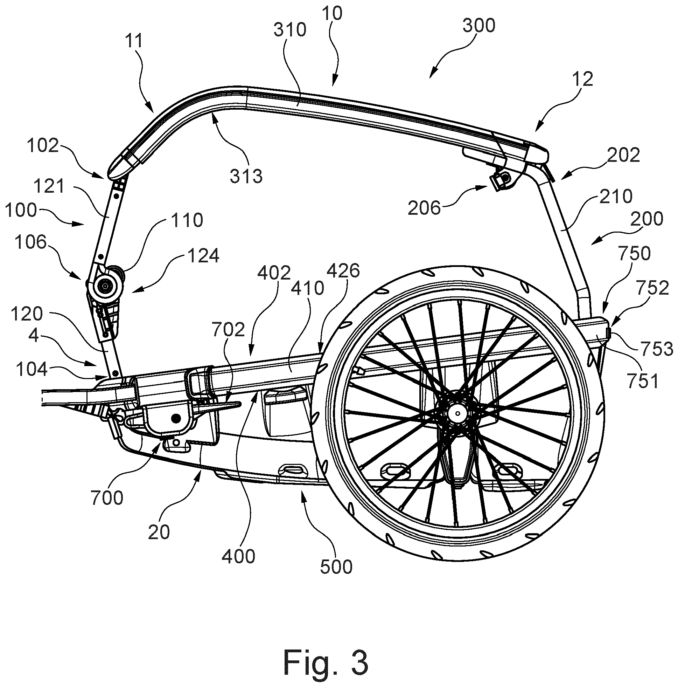

In some embodiments, the bike trailer comprises a parking brake mechanism 700. The parking brake mechanism 700 comprises an operating member. The operating member may comprise a foot operable brake pedal 702. As best seen in Figs. 1 and 3, the brake pedal 702 may be provided on a left lateral side portion of the enclosure 2, for example on the base portion 20, and forward of the wheel 5. The brake pedal 702 is arranged on the bike trailer 1 so as to be pushable by foot by a user standing forward of the brake pedal 702 or rearward of the brake pedal 702. The brake pedal 702 is mounted on the enclosure 2 to be pivotable about a pivot axis P1. The pivot axis P1 extends in cross direction of the bike trailer 1. In alternative configurations, the pivot axis P1 may extend in longitudinal direction of the bike trailer 1. The brake pedal 702 may comprise an operating portion 703. The operating portion 703 at least partially extends in lateral direction away from the enclosure 2, in other words, laterally outward. In this way, an operating portion is provided which is easily accessible from both longitudinal sides of the brake pedal.

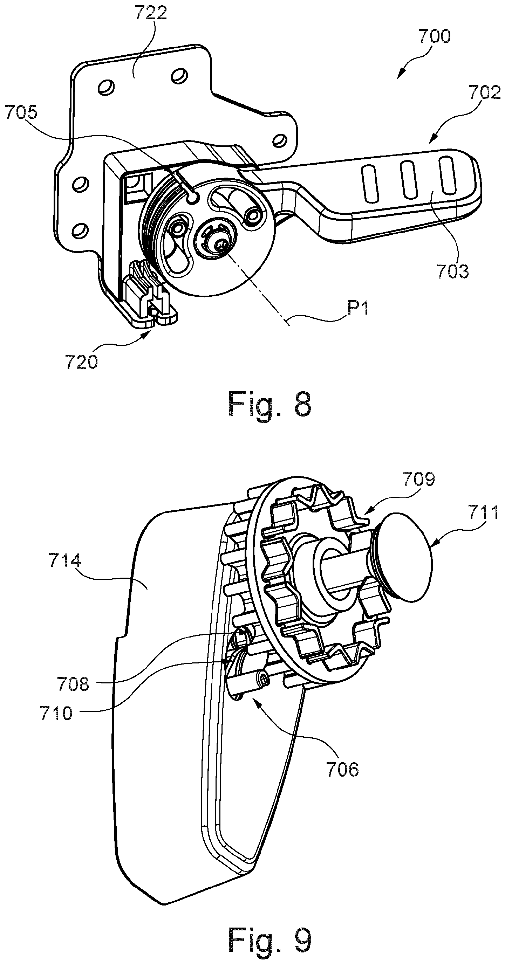

The parking brake mechanism 700 is configured to lock a rotation of the wheel 5 by establishing a positive locking between an engaging portion 706 operatively coupled to the brake pedal 702 of the parking brake mechanism 700 and a receiving portion 708 operatively coupled to the wheel 5. The receiving portion 708 is provided on a wheel support 709 to which a wheel 5 is couplable by means of a fixation member 711. The engaging portion 706 is configured to move along a curved path 710 between a locking position in which it engages with the receiving portion and an unlocking position in which an engagement between the engaging portion and the receiving portion is released. Fig. 9 shows a state in which the engaging portion 706 is disengaged from the receiving portion 708. As best seen in Fig. 10, the engaging portion 706 is provided on a lever 712 pivotably held in a housing 714. The lever 712 comprises a force receiving portion 716 operatively coupled to the operating member 702. In the shown embodiment, the operative coupling is established by a Bowden cable. The brake pedal 702 comprises a coupling portion 705 configured to attach to a Bowden cable end portion. In the embodiment, each wheel 5 may be lockable. An engaging portion may be assigned to each wheel and both engaging portions may be operatively coupled to the brake pedal 702, for example by Bowden cables supported in a supporting portion 720 provided on a brake pedal support 722 and both coupled to the coupling portion 705. The supporting portion 722 may be coupled to the enclosure 2, for example on the side wall portion 508, and to the upper supporting structure 402.

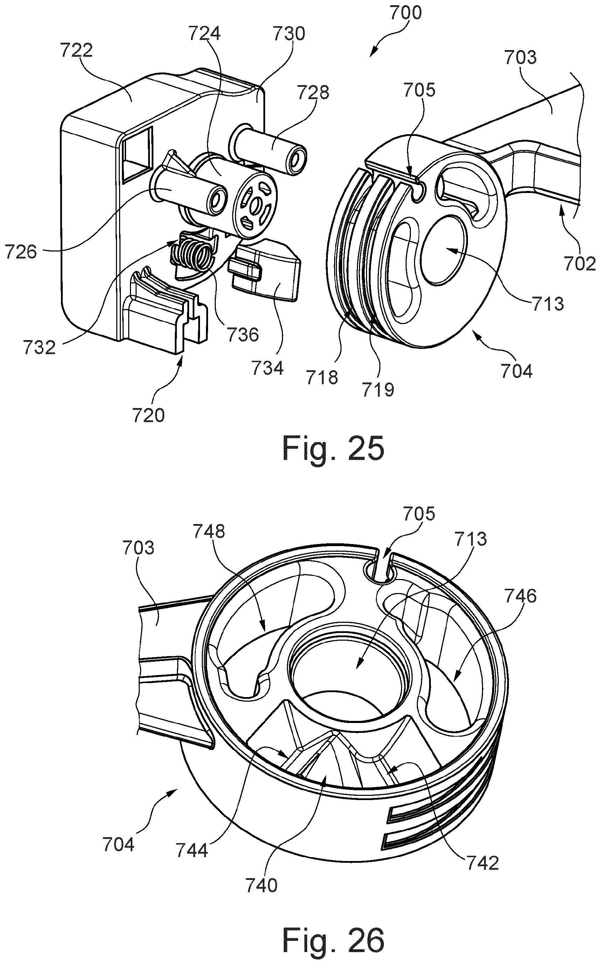

The brake pedal 702 comprises a supporting section 704. The coupling portion 705 may be provided in an outer circumference of the supporting section 704. The supporting section 704 is configured to be pivotably supported on the brake pedal support 722. The supporting section comprises an opening 713 for receiving a support protrusion 724 provided on the brake pedal support 722 on a side 730 facing the brake pedal 702. Furthermore, the supporting section 704 may comprise two slots 746, 748 each for receiving a respective motion limitation protrusion 726, 728 provided on the brake pedal support. Two guiding portions 718, 719 for receiving the inner wires of the Bowden cables, for example circumferential guiding grooves, may be provided in the outer circumference of the supporting section. The brake mechanism may further be configured such that the brake pedal is locked or arrested in two defined end positions, in particular in an unlocking position and a locking position. For that, the brake mechanism 700 may comprise a cam surface arrangement. The cam surface arrangement may comprise a cam surface 740 extending between two recesses 742, 744 provided in the supporting section 704, for example on a side facing the brake pedal support 722. The cam surface 740 is formed to define an apex between the recesses 742, 744 or highest elevation between the recesses 742, 744 as best seen in Fig. 26. The cam surface 740 is configured to contact an engaging member 734 provided on the brake pedal support 722. As best seen in Fig. 25, the engaging member 734 may be received in a guiding recess 732 and may be biased by an urging member 736, for example a spring, towards the cam surface 740. Accordingly, the engaging member 734 may be held in continuous contact with the cam surface 740. Moving the brake pedal 702 from the locking position in which the engaging member is engaged with recess 744, to the unlocking position in which the engaging member is engaged with recess 742, moves the cam surface 740 relative to the engaging member 734 so that the engaging member is first moved towards the brake pedal support 722 against the urging force of the urging member until the apex is passed. In this way, it is secured that the brake pedal remains in the desired position once moved to this position since it is only possible to move the brake pedal out of the respective position against a force urging the brake pedal towards the position from which it is to be moved. It is noted that the cam surface and the engaging member may be configured such that, once the engaging member has passed the apex, the brake pedal automatically moves to the desired position assisted by a force urging the brake pedal towards the desired position.

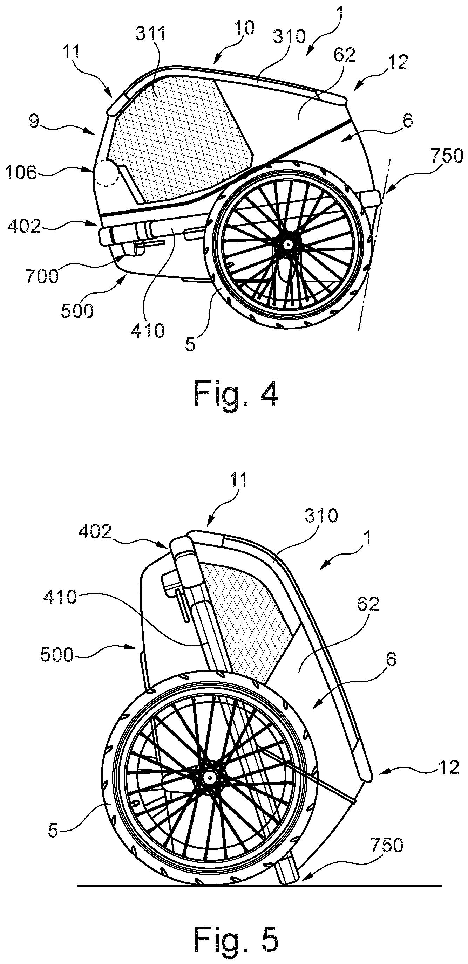

In some embodiments, at least one designated ground contact portion 750 configured to support the enclosure 2 on the ground in addition to the wheels 5 is provided. The ground contact portion 750 is provided on a rear side of the enclosure 2. The ground contact portion 750 together with an outer circumference of the wheels is able to support the bike trailer 1 in an upright position on level ground as best seen in Fig. 5.

In the embodiments shown for example in Figs. 1 to 8, two ground contact portions 750 are provided. The ground contact portions 750, the wheels 5 and the enclosure 2 are configured such that only the ground contact portions 750 and the wheels 5 contact the ground when the bike trailer 1 is brought in upright position and supported on level ground. As best seen in Fig. 4, the ground contact portions 750 are provided such that an imaginary plane contacting an outer circumference of the wheels 5 and the ground contact portions 750 does not intersect with or contact other portions of the bike trailer 2. The ground contact sections 750 are provided on the frame assembly 4 of the enclosure 2. The ground contact sections 750 may be provided on a rear end portion of the upper supporting structure 402. The ground contact sections 750 may be coupled to the rear end portions of the elongate side members 410, 411. As best seen in Fig. 2, one ground contact section 750 may be provided on the left rear attachment portion 418 and one ground contact section 750 may be provided on the right rear attachment portion 420.

Each ground contact portion 750 may comprise a detachable contact member 752. The contact member 752 may comprise a contact surface 753 and a coupling section for detachably fixing the contact member 752 to a fixation portion 751. The fixation portion 751 may be coupled to a rear end portion of an elongate side member 410, 411 of the lower frame portion 400 of the frame assembly 4 and/or to the base portion 20. The fixation portion 751 may be provided on or integrally formed with the rear attachment portion 418, 420 or on a covering for covering the rear attachment portion 418, 420 from outside.

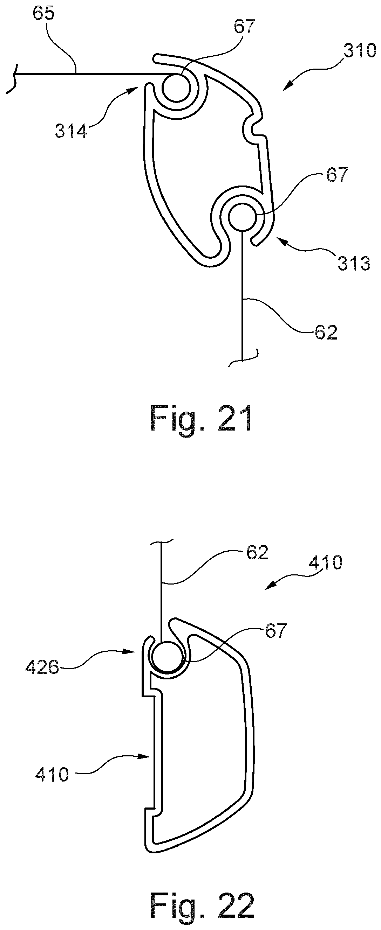

Each portion of the flexible covering 6 may comprise a piping 67 for coupling the respective portion of the flexible covering to the frame assembly 4. The front portion 61 may comprise a piping 67 at its lower end section such that the lower edge of the front portion 61 can be received in a piping groove 412 provided in the front portion of the upper supporting structure 402. The left side portion 62 may comprise a piping 67 at its lower end section and at its upper end section such that the lower edge may be coupled to the left lower elongate side member 410 and the upper edge may be coupled to the left upper elongate side member 310. The right side portion 63 may comprise a piping 67 at its lower end section and at its upper end section such that the lower edge may be coupled to the right lower elongate side member 411 and the upper edge may be coupled to the right upper elongate side member 311. The roof portion 65 may comprise a piping 67 on each lateral edge so that a left edge of the roof portion 65 may be coupled to the left upper elongate side member 310 and a right edge of the roof portion 65 can be coupled to the right upper elongate side member 311. As best seen in Fig. 21, the upper elongate side members 310, 311 may comprise a lower piping groove 313 and an upper piping groove 314 for receiving the piping portions of the respective coupling portions. The upper piping groove 314 may be provided on each inner side of the upper elongate side members 310, 311, in particular on a side facing the other elongate side member. As best seen in Fig. 22, the lower elongate side member 410 may comprise an upper piping groove 426 configured to receive the lower piping 67 of the left side portion 62.

In general, the upper supporting structure 402 may comprise a piping receiving portion 406 that may be provided all the way along the upper supporting structure 402. The piping receiving portion 406 may be configured to run along the upper supporting structure 402 outside of the front frame portion and the rear frame portion. In other words, when viewed from above, the lower end portions of the front frame portion 100 and the rear frame portion 200 are located inward of the piping receiving portion 406. The piping receiving portion 406 may comprise different sections which may be provided in different parts forming the upper supporting structure 402. For example, the piping receiving portion 406 may comprise a piping groove 426 provided in each side member 410, 411 and a piping groove 428 provided in the front cross member 412. The piping receiving portion 406 may also comprise sections formed in the connecting portion 414, 416 and in the rear attachment portion 418, 420 configured to guide the piping of the cover arrangement 6 around the front frame portion 100 and the rear frame portion 200 such that members of the front frame portion and of the rear frame portion may be concealed by a mounted cover arrangement 6.

The piping receiving portion 406 may be configured such that a continuous piping on the cover arrangement 6 may be supported therein. Such a continuous piping may be inserted into the piping receiving portion at one rear attachment portion and pulled along the piping receiving portion to the other rear attachment portion. The piping receiving portion 406 may alternatively be configured such that a cover arrangement 6 with a continuous piping on the lower edge may be inserted into the frame assembly 4 from the front of the bike trailer 1. For example, the connecting portions 414, 416 may comprise removable covers 417 which, when removed from the connecting portions 414, 416, grant access to the piping receiving portion 406. For example, as best seen in Fig. 23, when the covers 417 are removed from the connecting portions 414, 416, access to the piping grooves 426, 428 in the front cross member 412 and the side members 410, 411 is granted. A piping portion on the lower edge of the front portion 61 may then first be positioned in the front piping groove 428 in the front cross member 412 and the piping portions on the lower edge of the side portions 62, 63 may then be inserted into the piping grooves 426 in the side members from the front side of the frame assembly 4.

In some embodiments, the piping portions on the upper edge of the side portions 62, 63 are inserted into the lower piping grooves 313 in the upper elongate side members 310, 311 together with the insertion of the piping portions on the lower edge of the side portions 62, 63 in the piping grooves 412 in the lower elongate side members 410, 411. If the upper elongate side members 310, 311 are curved as described before, the upper frame portion 300 may be folded towards the upper supporting structure 402 to allow an insertion of the side portions 62, 63. For example, the upper frame portion 300 may be foldable towards the upper supporting structure 402 such a maximum distance between the piping grooves in the upper elongate side members 310, 311 and the piping grooves 412 in the lower elongate side members 410, 411 corresponds to the shortest distance between piping portions on the lower edge and the upper edge of the side portion 62, 63. For that, the frame assembly may be configured foldable, for example in a manner as already described before, in particular with a foldable front frame portion 100 and/or with a foldable or disconnectable rear frame portion 200.

In some embodiments, the roof portion 65 of the cover arrangement may be coupled to the upper frame portion 300 in a last mounting step. For example, the roof portion 65 may be inserted into the upper piping grooves 314 on the upper elongate side members 310, 311 from the front of the frame assembly and pulled into the upper frame portion 300, for example up to the upper cross bar 312. In some configurations, a rear end portion, for example a rear edge, of the roof portion 65 is fixable to the upper cross bar 312.

In some embodiments, the rear portion 64 of the flexible covering 60 may be fixed to the upper cross bar 312. Furthermore, in some embodiments, a rear edge portion of the side portions 62, 63 may comprise a zipper partner configured to be coupled to a zipper partner provided on lateral outer edges of the rear portion 64 of the flexible covering 60. A rear lower portion of the side portions 62, 63 may comprise a piping for coupling the rear lower portion to the piping grooves 518 provided on the base shell 23 or bottom portion 500 on the rear wall portion 512.

It is noted that the removable caps as may be provided on the front connecting portions 414, 416 and on the rear attachment portions 418, 420 for granting access to the piping receiving portion 406. The removable caps may form a portion of the receiving portion 406 together with the front connecting portions 414, 416 and the rear attachment portions 418, 420, respectively. Caps that are mountable on the rear attachment portions may comprise the before mentioned ground contact portion 750 or define such ground contact portion. For example, the caps may form a fixation portion 751 to which a contact member 752 may be detachably fixed.

With the above configuration of the frame assembly 4 and the cover arrangement 6, it is possible to stepwise accustom a pet to be transported in the bike trailer to the bike trailer since it is possible to stepwise fix portions of the cover arrangement 6 on the frame assembly. Furthermore, attaching and detaching the cover arrangement is simplified. In a first step, the bike trailer may be configured such that the cover arrangement 6 is fully detached and removed from the frame assembly. In such a state, a pet does not feel spatially constricted when entering the base portion 20. In a second step, the cover arrangement 6 may be partially provided on the frame assembly 4. For example, one of the side portions 62, 63 may then be attached to the frame assembly. After that, the other one of the side portions 62, 63 may be attached. Then, the roof portion may be attached and finally, the rear portion 64 may be attached completing the mounting of the cover arrangement 6 on the frame assembly. In this way, the pet may be stepwise accustomed to the interior compartment defined by the cover arrangement 6.

In some embodiments, the pet bike trailer 1 comprises a base insert 600. The base insert 600 is configured to be placed in the base portion 20. The base insert 600 may be detachably mountable to the cover arrangement 6. The base insert 600 comprises an edge portion 602. In some embodiments, the bike trailer 1 is configured such that the edge portion 602 is detachably couplable to the cover arrangement 6. The bike trailer 1 may comprise a connecting arrangement 610 for coupling the edge portion 602 to the cover arrangement 6. The connecting arrangement 610 is configured to join the cover arrangement 6 and the base insert 600 by coupling connecting partners provided on the cover arrangement 6 and on the edge portion 602, for example by positively locking the connecting partners. The connecting arrangement 610 may comprise a hook and loop fastener, for example Velcro tapes. In alternative configurations, the connecting arrangement 610 may comprise a zipper arrangement 612 with zipper partners forming the connecting partners. The zipper partners may be zipper bands or zipper tapes. One zipper partner may be provided on the cover arrangement 6, for example at a position inward of the edge portion and/or of a piping provided on the cover arrangement 6. The zipper partner may be provided on a sewing allowance of a lower piping portion provided on the cover arrangement 6. The base insert 600 is configured to cover an inner side of the base portion 20 up to a position above a connecting portion between the cover arrangement 600 and the frame assembly 4. For example, the base insert 600 may be configured to extend up to a position above a piping groove 426 formed in the upper supporting structure 402 and/or may extend up to a position above a lower piping portion of the cover arrangement 6 received in the piping groove 426. The zipper arrangement 612 may be provided such that the lower right frame portion and the lower left frame portion are provided between the base insert and the cover arrangement 6. Accordingly, separate zipper sections adjacent to the frame portions may be provided. For example, a front zipper section may be provided between the lower right and left frame portions and further zipper sections may be provided in the region of the lower elongate side members. The base insert 600 may comprise a padding 614 on an inner side and/or pockets 616, 618, 620 openable and closable by flaps 622, 624, 626 and configured to receive reinforcing tabs 630 on an outer side.

In conclusion a, it is pointed out that the terms like "comprising" or the like are not intended to rule out the provision of additional elements or steps. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims and the below aspects.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.

Aspect 1: Bike trailer (1), in particular pet bike trailer, comprising
an enclosure (2) defining a compartment (3),
wheels (5) for supporting said enclosure (2) on the ground, and
at least one designated ground contact portion (750) configured to support said enclosure on the ground in addition to said wheels (5),
wherein said ground contact portion (750) is provided on a rear side of said enclosure (2), and
wherein said ground contact portion (750) together with an outer circumference of said wheels is able to support said bike trailer (1) in an upright position on level ground.

Aspect 2: Bike trailer (1) according to aspect 1, wherein said ground contact portion (750), said wheels (5) and said enclosure (2) are configured such that only said at least one ground contact portion (750) and said wheels (5) contact the ground when said bike trailer (1) is brought in upright position and supported on level ground, or wherein said at least one ground contact portion (750) is provided such that an imaginary plane contacting an outer circumference of said wheels (5) and said at least one ground contact portion (750) does not intersect with or contact other portions of the bike trailer (2).

Aspect 3: Bike trailer (1) according to one of the preceding aspects, wherein at least one ground contact portion (750) is provided on a frame assembly (4) of said enclosure (2), wherein said frame assembly (4) may comprise an elongate side member (410, 411) and said ground contact portion (750) may be coupled to a rear end portion of said elongate side member (410, 411).

Aspect 4: Bike trailer (1) according to one of the preceding aspects, wherein at least one ground contact portion (750) is provided on a base portion (20), for example on a tub-like bottom portion (500).

Aspect 5: Bike trailer (1) according to one of the preceding aspects, wherein said ground contact portion (750) comprises a detachable contact member (752), wherein said contact member (752) comprises a contact surface (753) and a coupling section for detachably fixing the contact member (752) to a fixation portion (751).

Aspect 6: Bike trailer (1) according to aspect 5, wherein said fixation portion (751) may be coupled to a rear end portion of an elongate side member (410, 411) of a lower frame portion (400) of a frame assembly (4) and/or to said base portion (20).

Aspect 7: Bike trailer (1) according to one of the preceding aspects, wherein said wheels (5) are configured and mounted on said enclosure (2) such that they extend beyond a lower rear portion of said enclosure (2) when viewing said bike trailer (1) from a side, for example beyond a lower rear portion of a base portion (20).

Aspect 8: Bike trailer (1) according to one of the preceding aspects, wherein said enclosure (2) is transferrable between a use configuration (I) with enlarged volume and a stowage configuration (III) with a reduced stowage volume, wherein said enclosure (2) is further transferable into a predefined intermediate configuration (II) in which it comprises an intermediate volume between said enlarged volume and said stowage volume.

Aspect 9: Bike trailer (1), in particular pet bike trailer, comprising
an enclosure (2) defining a compartment (3),
wheels (5) for supporting said enclosure (2) on the ground, and
a parking brake mechanism (700) configured to lock a rotation of said wheels,
wherein said parking brake mechanism (700) comprises a foot operable brake pedal (702),
wherein said brake pedal (702) is arranged on said bike trailer (1) so as to be pushable by foot by a user standing forward of said brake pedal (702) or rearward of said brake pedal (702).

Aspect 10: Bike trailer (1) according to aspect 9, wherein said brake pedal (702) is arranged on a lateral side portion of said enclosure (2) at a position forward of a wheel (5).

Aspect 11: Bike trailer (1) according to one of aspects 9 and 10, wherein said brake pedal (702) is mounted on said enclosure (2) to be pivotable about a pivot axis (P1), said pivot axis (P1) extending in cross direction of said bike trailer (1) or in longitudinal direction of said bike trailer (1).

Aspect 12: Bike trailer (1) according to one of aspects 9 to 11, wherein an operating portion (703) of said brake pedal (702) at least partially extends in lateral direction away from said enclosure (2).

Aspect 13: Bike trailer (1), in particular pet bike trailer, wherein said parking brake mechanism (700) is configured to lock a rotation of said wheel by establishing a positive locking between an engaging portion (706) operatively coupled to an operating member of said parking brake mechanism (700) and a receiving portion operatively coupled to said wheel (5),
wherein said engaging portion is configured to move along a curved path between a locking position in which it engages with said receiving portion and an unlocking position in which an engagement between said engaging portion and said receiving portion is released.

Aspect 14: Pet bike trailer, comprising
a base portion (20), for example a tub-like bottom portion,
a frame assembly (4) attached to said base portion (20),
a cover arrangement (6) attachable to said frame assembly (4), and
a base insert (600) configured to be placed in said base portion (20), wherein said base insert (600) is configured detachably mountable to said cover arrangement (6).

Aspect 15: Pet bike trailer (1) according to aspect 14, further comprising a connecting arrangement (610) for connecting an edge portion (602) of said base insert (600) to said cover arrangement (6), wherein said connecting arrangement (610) is configured to join the cover arrangement (6) and the base insert (600) by coupling connecting partners provided on said cover arrangement (6) and on said edge portion (602), for example by positively locking said connecting partners.

Aspect 16: Pet bike trailer (1) according to aspect 15, wherein said connecting arrangement (610) comprises a hook and loop fastener, for example Velcro tapes.

Aspect 17: Pet bike trailer (1) according to aspect 15, wherein said connecting arrangement (610) comprises a zipper arrangement (612) with zipper partners forming said connecting partners, wherein said zipper partners may be zipper bands or zipper tapes, wherein one zipper partner may be provided on said cover arrangement (6) on a sewing allowance of a lower piping portion provided on said cover arrangement (6).

Aspect 18: Pet bike trailer according to aspect 14, wherein said base insert (600) is configured to cover an inner side of the base portion(20) up to a position above a connecting portion between said cover arrangement (600) and said frame assembly (4).

Aspect 19: Pet bike trailer according to one of aspects 14 to 18, wherein said base insert (600) comprises a padding on an inner side and/or pockets for receiving reinforcing tabs on an outer side.

Aspect 20: Bike trailer (1), for example pet bike trailer, comprising
a frame assembly (4) comprising a front frame portion (100), an upper frame portion (300) and a lower frame portion (400), wherein said front frame portion (100) is coupled to said upper frame portion (300) and said lower frame portion (400),
a cover arrangement (6) comprising two side wall portions (62, 63), a front portion (61) and a roof portion (65), wherein said frame assembly (4) and said cover arrangement (6) are configured such that at least said side wall portions (62, 63) are insertable into the frame assembly (4) between said upper frame portion (300) and said lower frame portion (400).

Aspect 21: Bike trailer according to aspect 20, wherein said front portion (61) couples said side wall portions (62, 63) to each other, wherein said front portion (61) and said side wall portions (62, 63) are integrally formed with each other and/or fixedly coupled to each other, for example sewn to each other.

Aspect 22: Bike trailer according to aspect 20 or aspect 21, wherein said lower frame portion (400) comprises a piping receiving portion (406) and said cover arrangement (6) comprises a lower piping portion (67) configured to be coupled with said piping receiving portion (406).

Aspect 23: Bike trailer according to aspect 22, wherein said lower frame portion (400) comprises elongate side members (410, 411) and wherein said piping receiving portion (406) comprises a piping groove (426) provided in each elongate side member (410, 411).

Aspect 24: Bike trailer according to aspect 23, wherein said lower frame portion (400) comprises a front cross member (412) and wherein said piping receiving portion (406) comprises a piping groove (428) provided in said front cross member (412).

Aspect 25: Bike trailer according to one of aspect 23, wherein said lower frame portion (400) comprises connecting portions (414, 416) connecting said front cross member (412) with said elongate side members (410, 411), wherein said connecting portions (414, 416) are configured to receive and guide said lower piping portion (67) between adjacent members (410, 411, 412) comprising said piping grooves (426, 428), wherein covers (417) may be detachably mountable on the connecting portions (414, 416), wherein said covers (417) are configured to partially define or limit said piping receiving portion (406) when mounted on the respective connecting portion (414, 416), and wherein said connecting portions (414, 416) are configured such that access to the piping receiving portion (406) is granted when said covers (417) are removed from said connecting portions (414, 416).

Aspect 26: Bike trailer (1) according to aspect 25, wherein said upper frame portion (300) comprises upper elongate side members (310, 311), wherein said upper elongate side members (310, 311) comprise a lower piping groove (313) for receiving an upper piping (67) of said side wall portion (62, 63) of said cover arrangement (6) and/or an upper piping groove (314) configured to receive a piping (67) on a lateral edge of said roof portion (65) of said cover arrangement (6).

Aspect 27: Pet bike trailer (1) comprising
a tub-like bottom portion (500), and
a frame assembly (4) attached to said tub-like bottom portion (500), said frame assembly being configured to support a cover arrangement (6) and limiting an interior compartment together with said tub-like bottom portion (500),
wherein said tub-like bottom portion (500) comprises an opening (514) on a rear side thereof.

Aspect 28: Pet bike trailer (1) according to aspect 27, wherein said bottom portion (500) comprises a bottom section (504) providing a support from below, a front wall portion (506) limiting an accommodating space of said bottom portion (500) at a forward end portion (501) thereof, side wall portions (508, 510) limiting an accommodating space of said bottom portion (500) in cross direction, and a rear wall portion (512) at least partially limiting said accommodating space of the bottom portion (500) at a rearward end portion (502), wherein said opening (514) is provided in said rear wall portion (512).

Aspect 29: Pet bike trailer (1) according to aspect 27 or aspect 28, further comprising a piping groove arrangement provided on or adjacent to portions limiting said opening (514), wherein said piping groove arrangement may comprise a piping mounting rail (516) attached to an edge portion limiting said opening (514) and comprising a piping groove (518) for receiving a piping portion of a rear portion (64) of a flexible covering (60) of said cover arrangement (6).

Aspect 30: Pet bike trailer (1) according to aspect 28 or aspect 29, further comprising a recess (520) formed in an outer side and extending in cross direction of said tub-like bottom (500), said recess (520) being configured to receive a supporting member (51), such as a support beam, extending between wheel bearings (52), wherein said recess may be formed in a rear portion of said bottom section (504).

Aspect 31: Pet bike trailer (1) according to one of aspects 28 to 30, wherein a height of said front wall portion (506) is lower than a height of said rear wall portion (512).

Aspect 32: Pet bike trailer (1) according to one of aspects 27 to 31, wherein said bottom portion (500) comprises an upper edge portion (24), wherein said frame assembly (4) is coupled to said upper edge portion (24).

Aspect 33: Pet bike trailer (1) comprising
an enclosure (2) defining a compartment (3) for a pet to be transported,
wherein said enclosure (2) is transferrable between a use configuration (I) with enlarged volume and a stowage configuration (III) with a reduced stowage volume, wherein said enclosure (2) is further transferable into a predefined intermediate configuration (II) in which it comprises an intermediate volume between said enlarged volume and said stowage volume.

Aspect 34: Pet bike trailer according to aspect 33, comprising
a roof portion (10) comprising a front roof portion (11) and a rear roof portion (12),
a base portion (20) comprising a front base portion (21) and a rear base portion (22),
wherein said roof portion (10) is supported on said base portion (20) at said front roof portion (11) and at said rear roof portion (12), and
wherein said front roof portion (11) and said rear roof portion (12) are independently transferable between a use position and a stowage position,
wherein in said use position the respective roof portion (11, 12) is arranged at greater distance from said base portion (20) than in said stowage position.

Aspect 35: Bike trailer (1) according to aspect 34, wherein said enclosure (2) comprises
a frame assembly (4) at least partially limiting a boundary of said compartment (3) of said bike trailer (1), and
said frame assembly (4) comprising
a front frame portion (100) comprising a front upper end portion (102) configured to support said front roof portion (11) and a front lower end portion (104) coupled to said front base portion (21),
a rear frame portion (200) comprising a rear upper end portion (202) configured to support said rear roof portion (12) and a rear lower end portion (204) coupled to said rear base portion (22),
wherein said front frame portion (100) and said rear frame portion (200) are respectively configured such that a distance between said respective upper end portion and said respective lower end portion is adjustable.

Aspect 36: Bike trailer (1) according to aspect 35, wherein at least one of said front frame portion (100) and said rear frame portion (200) is foldable between a use configuration and a stowage configuration.

Aspect 37: Bike trailer (1) according to aspect 35, wherein said front frame portion (100) comprises a front frame hinge portion (106) coupling said front upper end portion (102) and said front lower end portion (104), wherein said front frame hinge portion (106) may be configured to arrest said front upper end portion (102) and said front lower end portion (104) in said use configuration.

Aspect 38: Bike trailer (1) according to aspect 37, wherein said front frame hinge portion (106) is configured to at least hinder said front upper end portion (102) and said front lower end portion (104) from moving out of the stowage configuration, wherein said front frame hinge portion (106) may comprise a cam surface arrangement or a locking pin arrangement.

Aspect 39: Bike trailer (1) according to aspect 37 or aspect 38, wherein said front frame hinge portion (106) may comprise a lock (110) configured to lock a rotation of said front upper end portion (102) and said front lower end portion (104) relative to each other when said front upper end portion (102) and said front lower end portion (104) are in the stowage configuration, wherein said lock may comprise a pin-lock.

Aspect 40: Bike trailer (1) according to one of aspects 37 to 39, wherein said front frame hinge portion (106) is configured as an over dead center joint.

Aspect 41: Bike trailer (1) according to one of aspects 36 to 40, wherein said rear upper end portion (202) and said rear roof portion (12) are coupled to each other by means of a disconnecting mechanism (206) allowing to tool-free disconnect said rear upper end portion (202) from said rear roof portion (12), for example a pin-lock.

Aspect 42: Bike trailer (1) according to one of aspects 35 to 41, wherein said lower end portions (104, 204) of said front and rear front frame portions (100, 200) are hingedly coupled to said base portion (20).

Aspect 43: Bike trailer (1) according to aspect 42, wherein said base portion (20) comprises a base shell (23), wherein said lower end portions (104, 204) are coupled to an upper edge portion (24) of said base shell (23).

Aspect 44: Bike trailer (1) according to aspect 43, further comprising a lower frame portion (400) coupled to said upper edge portion (24), wherein said lower end portions (104, 204) are coupled to said lower frame portion (400).

Aspect 45: Bike trailer (1) according to aspect 43, wherein said lower frame portion (400) comprises lower elongate side members (410, 411) extending in longitudinal direction of said bike trailer (1), wherein said lower elongate side members (410, 411) comprise keder grooves (412), wherein said keder grooves (412) are provided on an inner side of said elongate side members (410, 411).

Aspect 46: Bike trailer (1) according to one of aspects 43 to 45, further comprising an upper frame portion (300) coupled to said front upper end portion (102) and said rear upper end portion (202), wherein said upper frame portion (300) comprises upper elongate side members (310, 311) extending in longitudinal direction of said bike trailer (1), wherein each upper elongate side member (310, 311) comprises two keder grooves, wherein one keder groove of said keder grooves may be provided on an inner side of said upper elongate side members (310, 311) and another one of said keder grooves may be provided on a lower side of said elongate side members (310, 311).

Aspect 47: Bike trailer (1) according to one of aspects 34 to 46, wherein said base portion (20) comprises a tub-like bottom portion (500) with an opening (514) on the rear side and a recess (520) formed in an outer side and at least partially extending in cross direction of said tub-like bottom (500), said recess (520) being configured to receive a supporting member extending between wheel bearings.

Aspect 48: Bike trailer (1) according to one of aspects 33 to 47, wherein said base portion (20) comprises a base shell (23) and wherein the bike trailer (1) comprises a frame assembly (4) coupled to the base portion (20) and configured to allow the enclosure (2) to be transferrable between a use configuration (I) with enlarged volume and a stowage configuration (III) with a reduced stowage volume and into a predefined intermediate configuration (II) in which it comprises an intermediate volume between said enlarged volume and said stowage volume.

## Claims

1. Pet bike trailer (1) comprising
an enclosure (2) defining a compartment (3) for a pet to be transported,
wherein said enclosure (2) is transferrable between a use configuration (I) with enlarged volume and a stowage configuration (III) with a reduced stowage volume, wherein said enclosure (2) is further transferable into a predefined intermediate configuration (II) in which it comprises an intermediate volume between said enlarged volume and said stowage volume.

2. Pet bike trailer according to claim 1, comprising
a roof portion (10) comprising a front roof portion (11) and a rear roof portion (12),
a base portion (20) comprising a front base portion (21) and a rear base portion (22),
wherein said roof portion (10) is supported on said base portion (20) at said front roof portion (11) and at said rear roof portion (12), and
wherein said front roof portion (11) and said rear roof portion (12) are independently transferable between a use position and a stowage position,
wherein in said use position the respective roof portion (11, 12) is arranged at greater distance from said base portion (20) than in said stowage position.

3. Bike trailer (1) according to claim 2, wherein said enclosure (2) comprises
a frame assembly (4) at least partially limiting a boundary of said compartment (3) of said bike trailer (1), and
said frame assembly (4) comprising
a front frame portion (100) comprising a front upper end portion (102) configured to support said front roof portion (11) and a front lower end portion (104) coupled to said front base portion (21),
a rear frame portion (200) comprising a rear upper end portion (202) configured to support said rear roof portion (12) and a rear lower end portion (204) coupled to said rear base portion (22),
wherein said front frame portion (100) and said rear frame portion (200) are respectively configured such that a distance between said respective upper end portion and said respective lower end portion is adjustable.

4. Bike trailer (1) according to claim 3, wherein at least one of said front frame portion (100) and said rear frame portion (200) is foldable between a use configuration and a stowage configuration.

5. Bike trailer (1) according to claim 4, wherein said front frame portion (100) comprises a front frame hinge portion (106) coupling said front upper end portion (102) and said front lower end portion (104), wherein said front frame hinge portion (106) may be configured to arrest said front upper end portion (102) and said front lower end portion (104) in said use configuration.

6. Bike trailer (1) according to claim 5, wherein said front frame hinge portion (106) is configured to at least hinder said front upper end portion (102) and said front lower end portion (104) from moving out of the stowage configuration, wherein said front frame hinge portion (106) may comprise a cam surface arrangement.

7. Bike trailer (1) according to claim 5 or claim 6, wherein said front frame hinge portion (106) may comprise a lock (110) configured to lock a rotation of said front upper end portion (102) and said front lower end portion (104) relative to each other when said front upper end portion (102) and said front lower end portion (104) are in the stowage configuration, wherein said lock may comprise a pin-lock.

8. Bike trailer (1) according to one of claims 5 to 7, wherein said front frame hinge portion (106) is configured as an over dead center joint.

9. Bike trailer (1) according to one of claims 4 to 8, wherein said rear upper end portion (202) and said rear roof portion (12) are coupled to each other by means of a disconnecting mechanism (206) allowing to tool-free disconnect said rear upper end portion (202) from said rear roof portion (12), for example a pin-lock.

10. Bike trailer (1) according to one of claims 3 to 9, wherein said lower end portions (104, 204) of said front and rear front frame portions (100, 200) are hingedly coupled to said base portion (20).

11. Bike trailer (1) according to claim 10, wherein said base portion (20) comprises a base shell (23), wherein said lower end portions (104, 204) are coupled to an upper edge portion (24) of said base shell (23).

12. Bike trailer (1) according to claim 11, further comprising a lower frame portion (400) coupled to said upper edge portion (24), wherein said lower end portions (104, 204) are coupled to said lower frame portion (400).

13. Bike trailer (1) according to claim 11, wherein said lower frame portion (400) comprises lower elongate side members (410, 411) extending in longitudinal direction of said bike trailer (1), wherein said lower elongate side members (410, 411) comprise piping or keder grooves (412), wherein said piping or keder grooves (412) are provided on an inner side of said elongate side members (410, 411).

14. Bike trailer (1) according to one of claims 11 and 13, further comprising an upper frame portion (300) coupled to said front upper end portion (102) and said rear upper end portion (202), wherein said upper frame portion (300) comprises upper elongate side members (310, 311) extending in longitudinal direction of said bike trailer (1), wherein each upper elongate side member (310, 311) comprises two piping grooves, wherein one piping groove of said piping grooves may be provided on an inner side of said upper elongate side members (310, 311) and another one of said piping grooves may be provided on a lower side of said elongate side members (310, 311).

15. Bike trailer (1) according to one of claims 2 to 14, wherein said base portion (20) comprises a tub-like bottom portion (500) with an opening (514) on the rear side and a recess (520) formed in an outer side and at least partially extending in cross direction of said tub-like bottom portion (500), said recess (520) being configured to receive a supporting member extending between wheel bearings.

16. Bike trailer (1) according to one of the preceding claims, wherein said base portion (20) comprises a base shell (23) and wherein the bike trailer (1) comprises a frame assembly (4) coupled to the base portion (20) configured to allow the enclosure (2) to be transferrable between a use configuration (I) with enlarged volume and a stowage configuration (III) with a reduced stowage volume and into a predefined intermediate configuration (II) in which it comprises an intermediate volume between said enlarged volume and said stowage volume.
